(19) Europäisches Patentamt
European Patent Office
Office européen des brevets

(11) Numéro de publication: **0 063 987 B1**

# (12) FASCICULE DE BREVET EUROPEEN

(45) Date de publication du fascicule du brevet: **29.08.84**

(51) Int. Cl.³: **C 01 B 33/04**

(21) Numéro de dépôt: **82400646.4**

(22) Date de dépôt: **08.04.82**

## (54) Procédé de préparation de silane en milieu sels fondus.

(30) Priorité: **17.04.81 FR 8107765**

(43) Date de publication de la demande: **03.11.82 Bulletin 82/44**

(45) Mention de la délivrance du brevet: **29.08.84 Bulletin 84/35**

(84) Etats contractants désignés: **AT BE DE FR GB IT NL**

(56) Documents cités:
**CH - A - 388 917**
**FR - A - 1 323 193**
**US - A - 4 041 136**

**ANGEWANDTE CHEMIE, 70e année 1958, no. 20, page 625-7. Weinheim, DE, W. SUNDERMEYER et al.: "Neues Verfahren zur Darstellung von Silicium- und Borwasserstoffen"**

**Le dossier contient des informations techniques présentées postérieurement au dépôt de la demande et ne figurant pas dans le présent fascicule.**

(73) Titulaire: **RHONE-POULENC SPECIALITES CHIMIQUES, "Les Miroirs" 18, Avenue d'Alsace, F-92400 Courbevoie (FR)**

(72) Inventeur: **Grosbois, Jean, 357 Parc de Cassan, F-95290 l'Isle-Adam (FR)**
Inventeur: **Dumousseau, Jean-Yves, 60, rue des Dames, F-75017 Paris (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

EP 0 063 987 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de préparation de silane par hydruration de chlorosilanes dans un bain de sels fondus.

Le procédé de préparation de silane $SiH_4$ par réaction de chlorosilanes $SiH_{4-x}Cl_x$ sur de l'hydrure de lithium est connu. Cette réaction peut se faire dans un bain de sels fondus constitué notamment d'un mélange eutectique de chlorure de lithium et de chlorure de potassium qui fond vers 360° C. La réaction peut s'écrire:

$$4LiH + SiCl_4 \rightarrow SiH_4 + 4LiCl$$

Le silane ($SiH_4$) produit est gazeux et il est enlevé continuellement. Le chlorure de lithium ainsi formé enrichit le bain et ce bain peut être envoyé dans une zone d'électrolyse où est introduit de l'hydrogène de manière à reformer de l'hydrure de lithium et à ce que la réaction écrite ci-dessus puisse continuer à se dérouler.

Or, dans le pratique, ce procédé présente un inconvénient important.

En effet, la réaction des chlorosilanes sur l'hydrure de lithium est très exothermique de sorte que le silane formé se décompose partiellement dans le bain de sels fondus selon la réaction:

$$SiH_4 \rightarrow Si + 2H_2$$

Cette réaction devient notable vers 400—450° C.

Il en résulte que les rendements en $SiH_4$ ne sont jamais quantitatifs et qu'ils sont compris entre 40 et 80% au plus.

Il est connu, d'après le FR-A-1 323 193 de préparer du silane par réaction entre le tétrachlorure de silicium et l'hydrure de lithium dans une chambre maintenue entre 390° C et 430° C et contenant un mélange de sels fondus. Il est aussi suggéré à la page 7, colonne de gauche lignes 23 à 30 d'utiliser comme mélange de sels fondus un mélange ternaire (LiCl-NaCl-$CaCl_2$, LiCl-NaCl-RbCl, LiCl-KCl-RbCl, NaCl-KCl-$CaCl_2$).

L'objet de l'invention est donc un procédé qui permet de diminuer l'importance de la réaction de craquage du silane mentionnée ci-dessus et d'obtenir par conséquent un rendement en silane quantitatif.

Or, Il a été trouvé que certains bains de sels fondus permettent de minimister d'une manière surprenante cette réaction de craquage.

Le procédé de préparation de silane de l'invention par hydruration du chlorosilanes dans un bain de sels fondus dont la température de fusion n'est pas supérieure à 400° C est caractérisé en ce que l'on utilise, comme bain de sels, un mélange ternaire de chlorure de lithium, de chlorure de potassium et de chlorure de calcium ou de chlorure de lithium, de chlorure de potassium et de chlorure de baryum.

L'utilisation comme bains de sels fondus des mélanges ternaires selon l'invention est particulièrement avantageuse, car il apparaît que le craquage du silane n'intervient qu'à une température nettement plus élevée, de l'ordre d'une centaine de degrés, que celle à laquelle il se produit avec le mélange binaire classique LiCl—KCl, c'est-à-dire, dans ce cas, vers 400° C—450° C comme cela a été vu plus haut. On constate donc que les mélanges selon l'invention augmentent la stabilité de $SiH_4$.

En outre, l'utilisation des bains de sels de l'invention entraîne un avantage économique certain, car on met en oeuvre des quantités de chlorure de lithium, qui est un produit cher, moins importantes que dans le cas de binaire classique LiCl—KCl.

D'autres caractéristiques et avantages de l'invention seront mieux compris à la lecture de la description qui va suivre et qui se réfère au dessin annexé dans lequel:

— La figure unique correspond à trois courbes donnant le rendement en $SiH_4$ (en ordonnée) en fonction de la température (en abscisse) du mélange de sels fondus pour trois bains différents.

Les bains selon l'invention comportent tous du chlorure de lithium. Le choix des autres constituants se fera essentiellement en fonction de la température nécessaire à atteindre pour maintenir le mélange à l'état fondu, en particulier en fonction du point eutectique que peut présenter ce mélange. Cette température ne doit pas être supérieure à celle à laquelle risque de se produire le craquage du silane, c'est-à-dire 400° C environ.

Par ailleurs, en pratique, on préfère opérer à une température supérieure de 50 à 100° C environ à la température nécessaire pour maintenir le mélange à l'état fondu, ceci pour avoir un mélange présentant une bonne fluidité et pour améliorer les transferts de matières.

On sera ainsi amené à choisir de préférence les mélanges qui, compte tenu de la condition opératoire mentionnée ci-dessus présentent une température de fusion inférieure de 50 à 100° C environ par rapport à la température de craquage du silane mentionnée ci-dessus, c'est-à-dire une température de fusion de 300° C à 350° C.

On opère de préférence avec des mélanges eutectiques ou au voisinage de l'eutectique. Toutefois, il est possible de travailler avec des mélanges plus éloignés de l'eutectique dans la mesure où la température de fusion du bain reste inféreure à 400° C environ.

L'invention est illustrée par les exemples suivants, fournis à titre illustratif et nullement limitatif.

### Exemple 1

Dans un réacteur en inox cotenant le mélange eutectique fondu $CaCl_2$—KCl—LiCl (8—42—50 mole%) fondant vers 335° C et additionné d'hydrure de lithium (1 M/kg environ) on introduit un mélange gazeux à 6% de $SiCl_4$ dans

l'hydrogène. Le temps de séjour du gaz dans le mélange fondu est de l'ordre de 1 seconde.

On suit par analyse infrarouge à 2100 $cm^{-1}$ du mélange gazeux sortant du réacteur le pic de $SiH_4$, formé en fonction de la température du bain de sels fondus.

Les résultats sont reportés sur la courbe 1 de la figure. On voit que le craquage de $SiH_4$ n'apparaît que vers 480° C et que jusqu'à cette température, le rendement en silane est pratiquement égal à 100%.

Exemple 2

On utilise le mélange eutectique $BaCl_2-KCl-LiCl$ (6—40—54 mole%) fondant à 320°C. Les conditions opératoires et d'analyse sont les mêmes que dans l'exemple précédent. Les résultats sont reportés sur la courbe 2 de la figure. On voit que le craquage de $SiH_4$ n'apparaît que vers 500° C et que jusqu'à cette température le rendement en silane est pratiquement égal à 100%.

Exemple comparatif

On utilise dans les mêmes conditions que précédemment un mélange binaire eutectique $LiCl-KCl$ (58,8—41,2 mole%). Les résultats sont reportés sur la courbe 3. On voit que dès 400° C le rendement en $SiH_4$ est nettement inférieur à 100%.

Bien entendu, l'invention n'est nullement limitée aux modes de réalisation décrits et représentés qui n'ont été donnés qu'à titre d'exemple. En particulier, elle comprend tous les moyens constituant des équivalents techniques des moyens décrits ainsi que leurs combinaisons si celles-ci sont mises en oeuvre dans le cadre de la protection comme revendiqué.

**Revendications**

1. Procédé de préparation de silane par hydruration de chlorosilanes dans un bain de sels fondus dont la température de fusion n'est pas supérieure à 400°C caractérisé en ce que l'on utilise, comme bain de sels, un mélange ternaire de chlorure de lithium, de chlorure de potassium et de chlorure de calcium ou de chlorure de lithium, de chlorure de potassium et de chlorure de baryum.

2. Procédé selon la revendication 1 caractérisé en ce que l'on utilise un mélange ternaire eutectique.

**Patentansprüche**

1. Verfahren zur Herstellung von Silan durch Hydridbildung von Chlorsilanen in einem Bad aus geschmolzenen Salzen, deren Schmelztemperatur nicht über 400°C liegt, dadurch gekennzeichnet, daß man als Salzbad eine ternäre Mischung aus Lithiumchlorid, Kaliumchlorid und Calciumchlorid oder aus Lithiumchlorid, Kaliumchlorid und Bariumchlorid verwendet.

2. Verfahren nach Anspruch 1, dadurch gekennzeichnet, daß man ein ternäres eutektisches Gemisch verwendet.

**Claims**

1. Process for the preparation of silane by hydrogenation of chlorosilanes in a bath of molten salts whose melting point is not higher than 400° C, characterised in that as the salt bath there is used a ternary mixture of lithium chloride, potassium chloride and calcium chloride, or of lithium chloride, potassium chloride and barium chloride.

2. Process according to claim 1, characterised in that a eutectic ternary mixture is used.

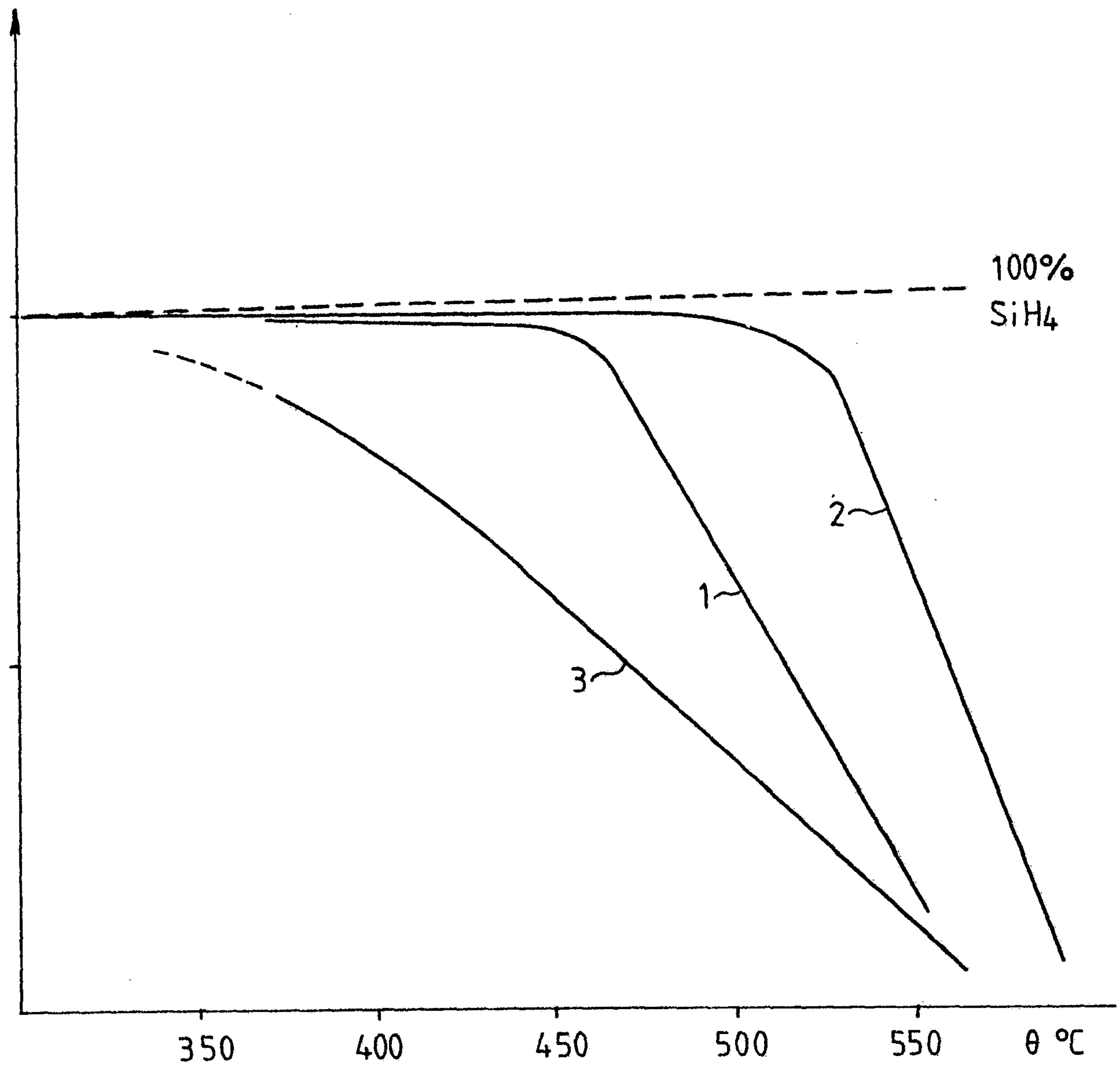
100%
SiH4
1
2
3
350
400
450
500
550
θ °C